Europäisches Patentamt

European Patent Office

Office européen des brevets

(11) Publication number: **0 565 891 A1**

# EUROPEAN PATENT APPLICATION

(21) Application number: **93104365.7**

(22) Date of filing: **17.03.93**

(51) Int. Cl.5: **C08F 236/04**, C08F 2/38

(30) Priority: **18.03.92 JP 62486/92**
**16.02.93 JP 26807/93**

(43) Date of publication of application:
**20.10.93 Bulletin 93/42**

(84) Designated Contracting States:
**CH DE ES FR GB IT LI NL SE**

(71) Applicant: **TAKEDA CHEMICAL INDUSTRIES, LTD.**
**1-1, Doshomachi 4-chome**
**Chuo-ku, Osaka 541(JP)**

(72) Inventor: **Suzuki, Shigeo**
**18-D73-104, Tsukumodai 5-chome,**
**Suita**
**Osaka 565(JP)**
Inventor: **Abe, Susumu**
**14-12, Daiwa 1-chome,**
**Takatsuki**
**Osaka 569(JP)**
Inventor: **Seo, Tomotaka**
**3-8, Sonehigashimachi 1-chome,**
**Toyonaka**
**Osaka 561(JP)**
Inventor: **Saruwatari, Takao**
**50-1, Yamadaminami,**
**Suita**
**Osaka 561(JP)**

(74) Representative: **von Kreisler, Alek,**
**Dipl.-Chem. et al**
**Patentanwälte**
**Von Kreisler-Selting-Werner,**
**Postfach 10 22 41,**
**Bahnhofsvorplatz 1**
**D-50462 Köln (DE)**

(54) **Copolymer latex, production and use thereof.**

(57) A method of producing a copolymer latex which comprises emulsion-polymerizing a monomer mixture comprising (a) a conjugated dienic monomer, (b) an ethylenically unsaturated monomer, and (c) an ethylenically unsaturated carboxylic acid monomer in the presence of a polyfunctional mercaptan compound as a chain-transfer agent.

Field of the Invention

This invention relates to a copolymer latex and its production and use. More particularly, the invention relates to a copolymer latex suitable for use as a binder in a paper coating composition for the production of coated paper which has an excellent adhesion, water resistance, ink acceptability, sheet gloss and blister resistance, and yet which is well-balanced in these properties, as well as a carpet backing or an adhesive. The invention further relates to a paper coating composition containing the above mentioned copolymer latex as a binder.

Description of Prior Art

With the recent increasing demand for coated paper, the paper coating speed is increasing, and with the increasing amount of production of printed matters, the printing speed is also increasing, in particular, in the field of offset printing. Under these circumstances, it is necessary that a copolymer latex for use as a binder in a paper coating composition has the following properties.

In the first place, it is necessary that the copolymer latex forms a film having an excellent adhesive strength on a coating base or a raw paper. The paper coating composition usually contains a pigment, and thus if the copolymer latex forms a film having an insufficient adhesive strength on the coating base, the pigment or the coating itself may be separated from the base by mechanical force applied to the coated paper under printing. The higher the printing speed and the more times the printing is repeated, the more such destruction of coated layer. Accordingly, it is necessary that the binder forms an excellent adhesion among the particles of pigments and between the coated layer and coating base.

Secondly, it is necessary that the copolymer latex forms a film having an excellent water resistance on the coating base. In particular, in offset printing, dampening water is used to wet a printing plate, so that it is necessary that the wetted coated layer has a strength against mechanical force applied thereto under printing. Namely, the coated layer should be imparted with water resistance.

Thirdly, with the speedup of printing, the heating and drying conditions have become more severe, and thus it is necessary that the coated layer has a much improved ink acceptability and blister resistance.

In addition, it is also necessary that the coated paper is excellent in optical properties such as sheet gloss.

As above set forth, it is necessary that the coated paper is excellent in adhesive strength, water resistance, ink accetability, sheet gloss and blister resistance among others, however, there has been offered no such coated paper, since all the above properties are contrary to each other.

For instance, a method is already known to improve adhesive strength of paper coating composition wherein a gel content is increased in a latex used as a binder in the composition. However, when the gel content is increased, the resultant latex is reduced in water resistance and blister resistance. On the other hand, a method is also already known to improve ink acceptability and sheet gloss wherein a particle size of latex used as a binder in the composition is increased, or a glass transition temperature of latex is raised. However, the method is proved to provide coated paper reduced in adhesive strength and water resistance.

To solve the above mentioned problems, there has been proposed a method wherein emulsion polymerization is effected in a polymerization vessel under a controlled addition of a chain-transfer agent thereto, as disclosed in Japanese Patent Publication No. 62-8443, No. 3-42360 or No. 4-41511. However, the resultant latex still fails to provide a paper coating composition which is excellent and well-balanced in the properties such as adhesive strength, water resistance, ink accetability, sheet gloss and blister resistance.

Brief Summary of the Invention

It is, therefore, an object of the invention to provide a copolymer latex which is suitable for use as a binder in a paper coating composition for the production of coated paper which has an excellent adhesive strength, water resistance, ink acceptability, sheet gloss and blister resistance, and yet which is well-balanced in those properties, as well as a carpet backing or an adhesive.

It is also an object of the invention to provide methods of producing such a copolymer latex as above stated.

It is still an object of the invention to provide a paper coating composition which contains such a copolymer latex as above stated as a binder therein and provides coated paper which has an excellent adhesive strength, water resistance, ink acceptability, white paper gloss and blister resistance and yet which is well-balanced in those properties.

2

According to the invention, there is provided a first method of producing a copolymer latex which comprises emulsion-polymerizing a monomer mixture comprising (a) a conjugated dienic monomer, (b) an ethylenically unsaturated monomer, and (c) an ethylenically unsaturated carboxylic acid monomer in the presence of a polyfunctional mercaptan compound as a chain-transfer agent.

Further according to the invention, there is provided a second method of producing a copolymer latex which comprises carrying out emulsion-polymerization of a monomer mixture comprising (a) a conjugated dienic monomer, (b) an ethylenically unsaturated monomer, and (c) an ethylenically unsaturated carboxylic acid monomer in the presence of a chain-transfer agent in a polymerization vessel thereby to provide a copolymer latex, wherein the monomer mixture and the chain-transfer agent are added to the polymerization vessel in a plurality of stages during the polymerization, and at the final stage, 1-20% by weight of the total of the monomer mixture are added together with a portion of the chain-transfer agent to the polymerization vessel continually.

Detailed Description of the Invention

The conjugated dienic monomer used may be any one used in the conventional production of latex, and it includes, for example, 1,3-butadiene, isoprene, 2-chloro-1,3-butadiene and 2-methyl-1,3-butadiene, among these is preferred 1,3-butadiene. The conjugated dienic monomer may be used singly or as a mixture.

The conjugated dienic monomer is incorporated in the copoymer latex so that the latex forms a film having elasticity and strength suitable for use as a binder in the paper coating composition. It is used in an amount of 10-80% by weight, preferably of 20-60% by weight, based on the total monomers used. When the amount of the dienic monomer is less than 10% by weight based on the total monomers used, the resultant copolymer latex may not have a sufficient adhesive strength, whereas when the amount of the dienic monomer is more than 80% by weight based on the total monomers used, the resultant copolymer latex may form a paper coating composition poor in water resistance or adhesive strength.

The ethylenically unsaturated monomer used includes, for example, an aromatic vinyl monomer such as styrene, α-methylstyrene, vinyltoluene, p-methylstyrene or vinylnaphthalene; a (meth)acrylic acid ester, preferably an alkyl (meth)acrylate wherein the alkyl has 1-10 carbons such as methyl acrylate, ethyl acrylate, butyl acrylate, 2-hydroxyethyl acrylate, methyl methacrylate, 2-hydroxyethyl methacrylate or glycidyl methacrylate; a (meth)acrylic acid amide such as acrylamide, methacrylamide, N,N-dimethylacrylamide or N-methylolacrylamide; a carboxylic acid vinyl ester such as vinyl acetate or vinyl propionate; a vinyl cyanide such as acrylonitrile, methacrylonitrile or α-chloroacrylonitrile; an ethylenically unsaturated amine compound such as methylaminoethyl (meth)acrylate, dimethylaminoethyl (meth)acrylate, dimethylaminopropyl (meth)acrylate, dibutylaminoethyl (meth)acrylate, dimethylaminoethyl (meth)-acrylamide, dimethylaminopropyl (meth)acrylamide, 2-vinylpyridine or 4-vinylpyridine; or any ethylenically unsaturated monomer other than the ethylenically unsaturated carboxylic acid monomer (c) which will be described hereinafter. The ethylenically unsaturated monomer may be used singly or as a mixture.

Among the above mentioned ethylenically unsaturated monomers, there may be preferably used a styrenic monomer as the aromatic vinyl monomer, such as styrene, α-methylstyrene, vinyltoluene or p-methylstyrene, with styrene being most preferred. There may be preferably used methyl methacrylate as the alkyl (meth)acrylate, and acrylonitrile as the vinyl cyanide.

The ethylenically unsaturated monomer is used in an amount of 20-90% by weight, preferably of 40-80% by weight, based on the total monomers used. When the amount of the ethylenically unsaturated monomer is less than 20% by weight based on the total monomers used, the resultant copolymer latex may provide a paper coating composition poor in water resistance, whereas when the amount is more than 90% by weight, the resultant copolymer latex may form a film too rigid to be suitably used as a binder in the paper coating composition, and the resultant composition may be poor in adhesive strength.

The ethylenically unsaturated carboxylic acid monomer used includes, for example, a monobasic unsaturated carboxylic acid such as acrylic acid, methacrylic acid or crotonic acid, a dibasic unsaturated carboxylic acid such as maleic acid, fumaric acid or itaconicacid, or their anhydrides, a mono ester or a half ester of the dibasic unsaturated carboxylic acid such as methyl maleate or methyl itaconate. These ethylenically unsaturated carboxylic acid monomers may be used singly or as a mixture.

The ethylenically unsaturated carboxylic acid monomer is used in an amount of 0.2-12% by weight, preferably of 0.5-8% by weight, based on the total monomers used. When the amount of the ethylenically unsaturated carboxylic acid monomer is less than 0.2% by weight based on the total monomers used, the resultant copolymer latex may provide a paper coating composition which has an insufficient mechanical stability and adhesive strength, whereas when the amount is more than 12% by weight, the resultant copolymer latex may have too a large viscosity to be used practically.

The monomer mixture used may contain a cross-linking monomer so that the resultant copolymer has a partial reticulated structure or cross-linked structure therein. The cross-linking monomer is a polyfunctional monomer which has a plurality of addition-polymerizable ethylenically unsaturated bonds in the molecule all of which have substantially the same polymerization reactivity.

There may be used as such a cross-linking monomer, for example, an aromatic divinyl monomer such as divinylbenzene, or an alkane polyol poly(meth)acrylate such as ethylene glycol diacrylate, butylene glycol diacrylate, hexanediol diacrylate, hexanediol dimethacrylate, oligoethylene glycol diacrylates, oligoethylene glycol dimethacrylates, trimethylolpropane diacrylate, trimethylolpropane dimethacrylate, trimethylolpropane triacrylate or trimethylolpropane trimethacrylate. Among these is in particular preferred divinylbenzene.

The cross-linking monomer may be used in an amount of not more than 10% by weight, preferably not more than 8% by weight, based on the total monomers used.

The first method of the invention uses a polyfunctional mercaptan as a chain-transfer agent which has at least two mercapto groups in the molecule. As such polyfunctional mercaptans, for example, preferred are mercaptans having the formula (I):

R-(A-SH)p    (I)

wherein R represents a hydrocarbon residue having a valence of p; p is an integer of 2-8, preferably of 2-4; and wherein A represents a covalent bond, or a divalent organic group having the formula (II):

$-(CH_2)m-O-CO-(CH_2)n-$    (II)

wherein m is an integer of 0-18, preferably of 0-8; and n is an integer of 1-18, preferably of 1-8, or a divalent organic group having the formula (III):

$-O-(CH_2)q-$    (III)

wherein q is an integer of 1-6, preferably of 1-3.

The hydrocarbon residue R is preferably an aliphatic hydrocarbon residue having a valence of p, preferably an aliphatic hydrocarbon residue of 1-24 carbons, more preferably of 1-16 carbons, or an alicyclic hydrocarbon residue having a valence of p, more preferably an alicyclic hydrocarbon residue of 3-12 carbons, most preferably of 4-8 carbons, or an aromatic hydrocarbon residue having a valence of p, more preferably an aromatic hydrocarbon residue of 6-12 carbons, most preferably of 6-10 carbons. The valence p is preferably 2, 3 or 4.

The hydrocarbon residue R may carry thereon one or more inactive substituents, such as a halogen, an alkoxy group of 1-8 carbons or an alkyl group of 1-8 carbons. More specifically, the halogen may be fluorine, chlorine or bromine atom; the alkoxy group may be methoxy, ethoxy, propoxy or butoxy group; and the alkyl group may be methyl, ethyl or propyl group.

Among the mercaptans having the formula (I), preferred are those wherein R is an aliphatic hydrocarbon residue of 1-4 carbons and having a valence of p wherein p is 2, 3 or 4, and A is $-O-(CH_2)q-$ wherein q is preferably 2 or 3.

Accordingly, the polyfunctional mercaptan used may include, for example, a difunctional mercaptan such as 1,10-decanedithiol, 1,14-tetradecanedithiol, p-benzenedithiol, m-xylenedithiol, p-xylenedithiol, ethylene glycol dithioglycolate, butanedioldithioglycolate, ethylene glycol dithiopropionate, butanediol dithiopropionate or triglycol dimercaptan; a trifunctional mercaptan such as 1,5,10-decanetrithiol, 1,3,5-benzenetrithiol, trimethylolpropane tristhioglycolate, trimethylolpropane tristhiopropionate, trimethylolpropane tristhiobutanate, trimethylolpropane tristhiopentanate or trimethylolpropane tristhiohexanate; or a tetrafunctional mercaptan such as pentaerythritol tetrakisthioglycolate, pentaerythritol tetrakisthiopropionate, pentaerythritol tetrakisthiobutanate, pentaerythritol tetrakisthiopentanate or pentaerythritol tetrakisthiohexanate.

In addition to the above polyfunctional mercaptan as represented by the formula (I), there may also be used as a chain-transfer agent, a further polyfunctional mercaptan, for example, a mercaptocarboxylic acid mercaptoalkyl ester such as 2-mercaptoethyl mercaptoacetate, 6-mercaptohexyl mercaptoacetate, 8-mercaptooctyl mercaptoacetate, 6-mercaptohexyl mercaptopropionate, 8-mercaptooctyl mercaptopropionate or 2-mercaptoethyl mercaptooctanoate, or such a polyfunctional mercaptan as dimercaptotriethylene disulfide, dimercaptodiethyl sulfide, 2,5-dimercapto-1,3,4-thiadiazole, 2-di-n-butylamino-4,6-dimercapto-S-triazine or 2,4,6-trimercapto-S-triazine.

Among the above exemplified polyfunctional mercaptans, there may be preferably used as a chain-transfer agent, a difunctional mercaptan such as 1,10-decanedithiol, 1,14-tetradecanedithiol, ethylene glycol dithioglycolate, butanediol dithioglycolate, ethylene glycol dithiopropionate, butanediol dithiopropionate, dimercaptotriethylene disulfide, dimercaptodiethyl sulfide or triglycol dimercaptan; a trifunctional mercaptan such as 1,5,10-decanetrithiol, trimethylolpropane tristhioglycolate or trimethylolpropane tristhiopropionate; or a tetrafunctional mercaptan such as pentaerythritol tetrakisthioglycolate or pentaerythritol tetrakisthiopropionate.

More particularly, 1,14-tetradecanedithiol, triglycol dimercaptan or trimethylolpropane tristhioglycolate is most preferred on account of reduced generation of fine coagulants and polymerization stability in the presence of which the emulsion polymerization is carried out.

The polyfunctional mercaptan may be used in an amount of 0.01-15 parts by weight, preferably 0.05-10 parts by weight, in relation to 100 parts by weight of the total monomers used. When the amount of the polyfunctional mercaptan is less than 0.01 parts by weight in relation to 100 parts by weight of the total monomers used, the resultant copolymer latex may be poor in adhesive strength or water resistance, whereas when the amount is more than 15 parts by weight in relation to 100 parts by weight of the total monomers used, the resultant copolymer latex may also be poor in adhesive strength.

The polyfunctional mercaptan may be used together with any conventional chain-transfer agent, if necessary. Such a conventional chain-transfer agent may includes, for example, an alkyl mercaptan such as octyl mercaptan, n-dodecylmercaptan, t-dodecylmercaptan, n-hexadecylmercaptan, t-hexadecylmercaptan, n-tetradecylmercaptan or t-tetradecylmercaptan; a xanthogendisulfide such as dimethylxanthogendisulfide, diethylxanthogendisulfide or diisopropylxanthogendisulfide; a thiuram disulfide such as tetramethylthiuram disulfide, tetraethylthiuram disulfide or tetrabutylthiuram disulfide; a halogenated hydrocarbon such as carbon tetrachl ori de, carbon te trabromi de or ethylene bromide; a mercaptocarboxylic acid such as mercaptoacetic acid, 2-mercaptopropionic acid or 3-mercaptopropionic acid, or its salt such as ammon i um mercaptoacetate; a mercaptodicarboxyl ic acid such as mercaptosuccinic acid, or its salt such as mercaptosuccinate; a mercaptan having a hydroxyl group in the molecule such as 2-mercaptoethanol or 3-mercapto-1,2-propanediol; a mercap tan having an amino group in the molecule such as 2-mercaptoethylamine; a monosulfide having a carboxyl group in the molecule such as thiodiglycolic acid or 3,3' -thiodipropionic acid, or its salt; a monosulfide having a hydroxyl group in the molecule such as $\beta$-thiodiglycolic acid; a monosulfide having an amino group in the molecule such as thiodiethylamine; a disulfide having a carboxylic group in the molecule such as dithiodiglycolic acid, 2,2'-dithiodipropionic acid, 3,3'-dithiodipropionic acid, 4,4'-dithiodipropionic acid or 4,4'-dithiobisbutyric acid, or its salt; an acid anhydride of a monosulfide or a disulfide such as thiodiglycolic anhydride; a monosulfide or a disulfide having both carboxylic group and amino group in the molecule such as D-, L- or DL-cystine or its salt; a halogenated hydrocarbon having a hydroxyl group in the molecule such as chloromethanol, 2-chloroethanol, 1-chloro-2-propanol, 2- or 3-chloro-n-propanol, 2-, 3- or 4-chloro-n-butanol or chloropentanol; a halogenated hydrocarbon having a carboxyl group in the molecule such as chloroacetic acid, dichloroacetic acid, trichloroacetic acid, chlorodifluoroacetic acid, 2-chloropropionic acid, 3-chloropropionic acid, 2-bromopropionic acid, 3-bromopropionic acid, 2-bromopentanoic acid, chlorosuccinic acid, chlorofumaric acid, chloromaleic acid or chloromalonic acid, or its salt; an acid anhydride of a halogenated hydrocarbon having a carboxyl group in the molecule such as chloromaleic anhydride; an alkyl mercaptocarboxylate such as 2-ethylhexyl mercaptoacetate, 2-ethylhexyl mercaptopropionate or tridecyl mercaptopropionate; an alkoxyalkyl mercaptocarboxylate such as methoxybutyl mercaptoacetate or methoxybutyl mercaptopropionate; a mercaptoalkyl carboxylate such as 2-mercaptoethyl octanoate; or allyl alcohol, $\alpha$-methyl-styrene dimer, terpinolene, $\alpha$-terpinene, dipentene or anisole.

Among the above conventional chain-transfer agents are preferred an alkyl mercaptan, a xanthogendisulfide, a thiuram disulfide, carbon tetrachloride, 2-ethylhexyl mercaptoacetate, methoxybutyl mercaptoacetate, methoxybutyl mercaptopropionate, 2-mercaptoethyl octanoate, $\alpha$-methylstyrene dimer or ter-pinolene.

The conventional chain-transfer agent may be used in an amount of less than 95% by weight, preferably in an amount of less than 80% by weight, of the total chain-transfer agents used. When the amount of the conventional chain-transfer agent is not less than 95% by weight of the total chain-transfer agents used, the resultant copolymer latex may provide a paper coating composition poor in adhesive strength, water resistance, ink acceptability or white paper gloss.

In the production of copolymer latex according to the invention, the emulsion-polymerization may be carried out in a known conventional manner. By way of example, the monomer mixture, a polymerization initiator, an emulsifier, a chain-transfer agent, and other additives if necessary, are added to an aqueous medium such as water, and then emulsion polymerization is started.

EP 0 565 891 A1

The initiator used is not specifically limited, but there may usually be used an inorganic persulfate such as potassium persulfate, sodium persulfate or ammonium persulfate; an organic peroxide such as cumene hydroperoxide, benzoyl peroxide or isopropylbenzene peroxide; or an azo compound such as 2,2'-azobis-(isobutyronitrile). The initiator may be used singly or as a mixture. Among these initiators, there may be preferably used a persulfate such as potassium persulfate, sodium persulfate or ammonium persulfate from the standpoint of polymerization stability.

The above mentioned initiator may be used as a redox polymerization initiator in combination with such a reducing agent as sodium bisulfate or ferrous sulfate.

The polymerization initiator may be used in an amount of 0.1-5 parts by weight, preferably 0.2-2 parts by weight, in relation to 100 parts by weight of the total monomers used.

The emulsifier used is also not specifically limited, but there may be usually used an anionic surfactant such as sodium dodecylbenzenesulfonate, sodium lauryl sulfate, sodium dodecyldiphenyl ether disulfonate or sodium dialkyl sulfosuccinate; a nonionic surfactant such as polyoxyethylene alkyl ester or polyoxyethylene alkyl aryl ester; an amphoteric surfactant such as an alkyl betaine type surfactant, e.g., lauryl betaine or stearyl betaine, or such as an amino acid salt type surfactant, e.g., lauryldi(aminoethyl)glycine salt or octyldi(aminoethyl)-glycine salt. The emulsifier may be used singly or as a mixture. Among the above exemplified is preferred such an anionic surfactant as sodium dodecylbenzene sulfonate or sodium dodecyldiphenyl ether disulfonate.

The emulsifier may be used in an amount of 0.05-2.5 parts by weight, preferably 0.1-1.5 parts by weight, in relation to 100 parts by weight of the total monomers used. When the amount of emulsifier used is more than 2.5 parts by weight in relation to 100 parts by weight of the total monomers, the resultant copolymer latex may provide a paper coating composition which has a poor water resistance, or foams undesirably when it is coated on paper.

The emulsion polymerization may be carried out in the presence of a chelating agent such as disodium ethylenediaminetetraacetate or a dispersing agent such as sodium formaldehydesulfoxylate or a suitable inorganic salt.

Further, the emulsion polymerization may be carried out either by a seed polymerization method wherein seeds are employed when the polymerization is started, or by a non-seed polymerization method wherein seeds are not employed in the polymerization.

The seed polymerization method is divided into two methods, that is, an internal method and external method. In the internal method, a part of the monomers used is in advance polymerized in a polymerization vessel to prepare seeds, and the residual monomers are added to such seeds and polymerized in the presence of such seeds. In the external method, a latex of fine particles is separately prepared, and is charged into a polymerization vessel as seeds, to which a monomer mixture is added and polymerized in the presence of such seeds. In turn, in the non-seed polymerization method, an emulsifier is placed in a polymerization vessel, and then a monomer mixture is added to the vessel to start the emulsion polymerization.

According to the first method of producing a copolymer latex of the invention, if either of the seed polymerization method or non-seed polymerization method is employed to carry out the emulsion polymerization of the monomer mixture comprising a conjugated dienic monomer, an ethylenically unsaturated monomer and an ethylenically unsaturated carboxylic acid monomer in the presence of a polyfunctional mercaptan compound as a chain-transfer agent, the manner in which the monomer mixture and chain-transfer agent are added to a polymerization vessel is not specifically limited. Thus, the monomer mixture and chain-transfer agent may be added in a lump to a polymerization vessel whereupon the polymerization is started; the monomer mixture and chain-transfer agent may be added in portions or stepwise to a polymerization vessel over a plurality of stages during the polymerization; or the monomer mixture and chain-transfer agent may be added continuously to a polymerization vessel during the polymerization. These manners may be suitably combined, if necessary.

Furthermore, when the monomer mixture and chain-transfer agent are added in a lump to a polymerization vessel, the amount of the monomer mixture and the chain-transfer agent, or the ratio of the monomer mixture to the chain-transfer agent may be varied at any stage. Also when the monomer mixture and chain-transfer agent are added continuously to a polymerization vessel, the amount of the monomer mixture and the chain-transfer agent, or the ratio of the monomer mixture to the chain-transfer agent may be varied continously or continually during the polymerization.

According to the first method of producing a copolymer latex of the invention, the polymerization conversion rate is preferably not less than 90%, and more preferably not less than 95%.

The second method of producing a copolymer latex according to the invention will now be described.

6

Accordingto the second method of the invention, if either of the seed polymerization manner or the non-seed polymerization manner is employed, the monomer mixture and the chain-transfer agent are added to a polymerization vessel in a plurality of stages, preferably in three or four stages, during the polymerization, and at the final stage of the addition of the monomer mixture and the chain-transfer agent, 1-20% by weight, preferably 3-20% by weight, most preferably 5-20% by weight, of the total of the monomer mixture are added together with a portion of the chain-transfer agent to the polymerization vessel continually.

Except the final stage, that is, from the first stage to the stage next to the final stage, the monomer mixture and the chain-transfer agent may be added in portions or stepwise over a plurality of stages or continually, or otherwise.

In the second method according to the invention, any known chain-transfer agent may be used in the emulsion polymerization. Accordingly, there may be used as such a chain-transfer agent, any monofunctional or polyfunctional mercaptan having at least two mercapto groups in the molecule.

There may be mentioned as such a mercaptan, for example, a monofunctional alkyl mercaptan such as octyl mercaptan, n-dodecyl mercaptan, t-dodecyl mercaptan, n-hexadecyl mercaptan, t-hexadecyl mercaptan, n-tetradecyl mercaptan or t-tetradecyl mercaptan; a difunctional mercaptan such as 1,10-decanedithiol, 1,14-tetradecanedithiol, ethylene glycol dithioglycolate, butanediol dithioglycolate, ethylene glycol dithiopropionate, butanediol dithiopropionate, dimercaptotriethylene disulfide, dimercaptodiethyl sulfide or triglycol dimercaptan; a trifunctional mercaptan such as 1,5,10-decanetrithiol, trimethylolpropane tristhioglycolate or trimethylolpropane tristhiopropionate; or a tetrafunctional mercaptan such as pentaerythritol tetrakisthioglycolate or pentaerythritol tetrakisthiopropionate.

There may be further mentioned as a chain-transfer agent, for example, a xanthogendisulfide such as dimethylxanthogendisulfide, diethylxanthogendisulfide or diisopropylxanthogendisulfide; a thiuram disulfide such as tetramethylthiuram disulfide, tetraethylthiuram disulfide or tetrabutylthiuram disulfide; a halogenated hydrocarbon such as carbon tetrachloride, carbon tetrabromide or ethylene bromide; a mercaptocarboxylic acid such as mercaptoacetic acid, 2-mercaptopropionic acid or 3-mercaptopropionic acid, or its salt such as ammonium mercaptoacetate; a mercaptodicarboxylic acid such as mercaptosinccinic acid, or its salt such as mercaptosuccinate; a mercaptan having a hydroxyl group in the molecule such as 2-mercaptoethanol or 3-mercapto-1,2-propanediol; a mercaptan having an amino group in the molecule such as 2-mercaptoethylamine; a monosinlfide having a carboxyl group in the molecule such as thiodiglycolic acid or 3,3'-thiodipropionic acid, or its salt; a monosulfide having a hydroxyl group in the molecule such as $\beta$-thiodiglycolic acid; a monosulfide having an amino group in the molecule such as thiodiethylamine; a disulfide having a carboxylic group in the molecule such as dithiodiglycolic acid, 2,2'-dithiodipropionic acid, 3,3'-dithiodipropionic acid, 4,4'-dithiodipropionic acid or 4,4'-dithiobisbutyric acid, or its salt; an acid anhydride of a monosinlfide or a disulfide such as thiodiglycolic anhydride; a monosulfide or a disulfide having both carboxylic group and amino group in the molecule such as D-, L- or DL-cystine or its salt; a halogenaned hydrocarbon having a hydroxyl group in the molecule such as chloromethanol, 2-chloroethanol, 1-chloro-2-propanol, 2- or 3-chloro-n-propanol, 2-, 3- or 4-chloro-n-butanol or chloropentanol; a halogenated hydrocarbon having a carboxyl group in the molecule such as chloroacetic acid, dichloroacetic acid, trichloroacetic acid, chlorodifluoroacetic acid, 2-chloropropionic acid, 3-chloropropionic acid, 2-bromopropionic acid, 3-bromopropionic acid, 2-bromopentanoic acid, chlorosuccinic acid, chlorofumaric acid, chloromaleic acid or chloromalonic acid, or its salt; an acid anhydride of a halogenated hydrocarbon having a carboxyl group in the molecule such as chloromaleic anhydride; an alkyl mercaptocarboxylate such as 2-ethylhexyl mercaptoacetate, 2-ethylhexyl mercaptopropionate or tridecyl mercaptopropionate; an alkoxyalkyl mercaptocarboxylate such as methoxybutyl mercaptoacetate or methoxybutyl mercaptopropionate; a mercaptoalkyl carboxylate such as 2-mercaptoethyl octanoate; or allyl alcohol, $\alpha$-methylstyrene dimer, terpinolene, $\alpha$-terpinene, dipentene or anisole.

Among the above conventional chain-transfer agents are preferred a monofunctional mercaptan, a polyfunctional mercaptan, a xanthogendisulfide, a thiuram disulfide, carbon tetrachloride, 2-ethylhexyl mercaptoacetate, 2-mercaptoethyl octanoate, methoxybutyl mercaptoacetate, methoxybutyl mercaptopropionate, $\alpha$-methylstyrene dimer or terpinolene. More particularly, preferred chain-transfer agents are those having at least one mercapto group in the molecule, such as a monofunctional mercaptan, a polyfunctional mercaptan, 2-ethylhexyl mercaptoacetate, methoxybutyl mercaptoacetate or methoxybutyl mercaptopropionate.

The chain-transfer agent may be used in an amount of 0.05-20 parts by weight, preferably in an amount of 0.1-15 parts by weight, most preferably in an amount of 0.2-10 parts by weight, in relation to 100 parts by weight of the total monomers used.

Further according to the second method of producing a copolymer latex of the invention, it is preferred that the chain-transfer agent added to the polymerization vessel at the final stage together with the

EP 0 565 891 A1

monomer mixture is such a chain-transfer agent as has at least one mercapto group in the molecule. It is also preferred that the amount of the chain-transfer agent added to the polymerization vessel at the final stage together with the monomer mixture is in the range of 25-90% by weight of the total amount of the chain-transfer agent used.

In the second method of the invention also, the polymerization conversion rate is preferably not less than 90%, and more preferably not less than 95%. However, the polymerization conversion rate immediately before the final stage is preferably in the range of 40-80% of the amount of the monomer mixture added to the polymerization vessel until the stage immediately before the final stage.

In the second method of the invention also, the emulsion polymerization may be carried out in a conventional manner except the final stage. Accordingly, by way of example, the monomer mixture, a polymerization initiator, an emulsifier, a chain-transfer agent, and other additives if necessary, are added to an aqueous medium such as water, and then emulsion-polymerization is started.

The resultant copolymer latex prepared according to the invention, either by the first or the second method, is especially suitable for use as a binder in a paper coating composition, as well as for use as a carpet backing, a painting composition, an adhesive for industrial use or home use.

A paper coating composition may be prepared by any known method by use of the copolymer latex of the invention. For instance, the copolymer latex is admixed with an inorganic pigment such as kaolin, clay, talc, titanium dioxide, calcium carbonate, aluminum hydroxide or satin white, a natural binder such as casein, starch or protein, a synthetic resin latex such as a polyvinyl alcohol latex or polyvinyl acetate latex, to provide a paper coating composition which contains the copolymer latex of the invention as a binder. If necessary, the paper coating composition may further contain a dispersing agent, defoaming agent, a leveling agent, an antiseptic, a water resisting agent or a mold releasing agent.

The paper coating composition may be coated on a coating base by a conventional method with, for example, an air knife coater, a blade coater, roll coater, an applicator or the like, to produce coated paper.

The invention will be described in more detail with reference to examples, but the invention is not limited to the examples. In the examples, parts and percents are by weight.

### Example 1

An amount of 5 parts of 1,3-butadiene, 6 parts of styrene, 2 parts of methyl methacrylate, 2 parts of fumaric acid, 0.5 parts of potassium persulfate, 100 parts of water, 0.1 part of sodium alkylbenzenesulfonate and 0.5 parts of 1,14-tetradecanedithiol were placed in a five liter capacity autoclave, and were then reacted at 70 °C under stirring.

After two hours, the residual monomer mixture composed of 30 parts of 1,3-butadiene, 45 parts of styrene, 8 parts of methyl methacrylate, 1 part of acrylic acid, 1 part of methacrylic acid, 1.5 parts of 1,14-tetradecanedithiol and 0.5 parts of sodium alkylbenzenesulfonate were added to the autoclave.

The reaction was carried out over a period of 15 hours, whereupon the polymerization conversion rate reached more than 97% (per 100 parts of the monomer mixture used), the reaction mixture was cooled to 30 °C, and was adjusted at a pH of 7.5±0.2 with sodium hydroxide. Then steam was blown into the reaction mixture to remove the unreacted monomers therefrom, and then the reaction mixture was concentrated to a solid content of 50%, thereby to provide a copolymer latex of the invention.

A paper coating composition as below was prepared using the thus obtained copolymer latex.

| | |
|---|---|
| Ultrawhite-90 (First class kaolin available from Engelhard) | 70 parts |
| Carbital-90 (heavy calcium carbonate available from ECC) | 30 parts |
| Allon T-40 (sodium polyacrylate available from Toa Gosei Kagaku Kogyo) | 0.1 part |
| Copolymer latex | 14 parts |
| Modified starch MS-4600 (Nippon Shokuhin Kako) | 3 parts |
| Water in such an amount as to form the composition having a solid content of 60% | |

The paper coating composition was coated on both sides of wood free paper having a basis weight of 64 g/m$^2$ at a rate of 15.0±0.5 g/m$^2$, and then dried with a hot air drier for 30 seconds.

The resultant coated paper was left standing overnight at a temperature of 23 °C and a relative humidity of 60%, and then supercalendered twice under a line pressure of 100 kg/cm and a roll temperature of 70 °C. The properties of the resultant coated paper are indicated in Table 2.

### Examples 2-20

Using the monomer mixture and chain-transfer agent indicated in Table 1, a copolymer latex was produced by emulsion polymerization in the same manner as in Example 1, and then a paper coating composition was prepared by use of the thus obtained copolymer latex. Coated paper was then produced by use of the paper coating composition, and its properties are indicated in Table 2.

### Comparative Examples 1-5

Using the monomer mixture and chain-transfer agent indicated in Table 3, a copolymer latex was produced by emulsion polymerization in the same manner as in Example 1, and then a paper coating composition was prepared by use of the thus obtained copolymer latex. Coated paper was then produced by use of the paper coating composition, and its properties are indicated in Table 4.

### Example 21

An amount of 5 parts of 1,3-butadiene, 6 parts of styrene, 2 parts of methyl methacrylate, 2 parts of fumaric acid, 0.5 parts of potassium persulfate, 100 parts of water, 0.1 part of sodium alkylbenzenesulfonate and 0.2 parts of triglycol dimercaptan were placed in a five liter capacity autoclave as the first stage feed, and were then reacted at 70°C under stirring.

After two hours, as the second stage feed, 25 parts of 1,3-butadiene, 40 parts of styrene, 5 parts of methyl methacrylate, 0.5 parts of acrylic acid, 1 part of methacrylic acid, 0.5 parts of triglycol dimercaptan and 0.5 parts of sodium alkylbenzenesulfonate were added to the autoclave.

After further 30 minutes, as the final stage feed, 5 parts of 1,3-butadiene, 5 parts of styrene, 3 parts of methyl methacrylate, 0.5 parts of acrylic acid and 0.5 parts of triglycol dimercaptan were added to the autoclave over a period of three hours continually.

The reaction was carried out over a period of 15 hours, whereupon the polymerization conversion rate reached more than 97% (per 100 parts of the monomer mixture used), the reaction mixture was cooled to 30°C, and was adjusted at a pH of 7.5±0.2 with sodium hydroxide. Then steam was blown in to the reaction mixture to remove the unreacted monomers therefrom, and then the reaction mixture was concentrated to a solid content of 50%, thereby to provide a copolymer latex of the invention.

A paper coating composition was prepared in the same manner as in Example 1 using the thus obtained copolymer latex.

The paper coating composition was coated on both sides of wood free paper having a basis weight of 64 g/m$^2$ at a rate of 15.0±0.5 g/m$^2$, and then dried with a hot air drier for 30 seconds.

The resultant coated paper was left standing overnight at a temperature of 23°C and a relative humidity of 60%, and then supercalendered twice under a line pressure of 100 kg/cm and a roll temperature of 70°C. The properties of the resultant coated paper are indicated in Table 6.

### Examples 22-30

Using the monomer mixture and chain-transfer agent indicated in Table 5, a copolymer latex was produced by emulsion polymerization in the same manner as in Example 21, and then a paper coating composition was prepared by use of the thus obtained copolymer latex. Coated paper was then produced by use of the paper coating composition, and its properties are indicated in Table 6.

### Comparative Examples 6-9

Using the monomer mixture and chain-transfer agent indicated in Table 7, a copolymer latex was produced by emulsion polymerization in the same manner as in Example 21, and then a paper coating composition was prepared in the same manner as in Example 1 by use of the thus obtained copolymer latex. Coated paper was then produced by use of the paper coating composition, and its properties are indicated in Table 8.

### Comparative Examples 10-13

Using the monomer mixture and chain-transfer agent indicated in Table 7, a copolymer latex was produced by emulsion polymerization in the same manner as in Example 21, except that the monomer mixture and the chain-transfer agent were fed in a lump at the final stage (the third stage), and then a paper coating composition was prepared by use of the thus obtained copolymer latex. Coated paper was then produced by use of the paper coating composition. The properties of the resultant coated paper are indicated in Table 8.

In Tables 1, 3, 5 and 7, the indication (a/b) means that the amount (parts by weight) of the monomer mixture, chain-transfer agent or polymerization initiator fed to the polymerization vessel at the first stage is a, and the amount at the second stage is b. Similarly, the indication (a/b/c) means that the amount of the monomer mixture, chain-transfer agent or polymerization initiator fed to the polymerization vessel at the first stage is a, the amount at the second stage is b, and the amount at the third stage is c.

The properties indicated in Tables 2, 4, 6 and 8 were measured by the following methods.

(1) Toluene insoluble fractions (Gel fractions)

The copolymer latex was spread on a glass mold to prepare a film of 0.3 mm thick. The film was cut to 2-3 mm square, and an amount of 0.4 g was precisely weighed. The thus obtained test piece was dipped in 100 ml of toluene and agitated in a shaking thermostat at 30°C for 6 hours. Thereafter, the toluene was filtered with a 100 mesh wire screen. The amount of solid on the wire screen was weighed, and the gel content was calculated based on the amount of the solid.

(2) Adhesive strength (Dry Picking)

Printing was made on the test piece several times with a tack No. 10 India ink by use of an RI tester (Akira Seisakusho), and the degree of picking was evaluated with the naked eye in terms of five grades. The larger the value, the more the adhesive strength (the less the picking).

(3) Water resitance (Wet Picking)

Immediately after the test piece was wetted with a molton roll by use of an RI tester, printing was made thereon with a tack 12 red ink, and the degree of picking was evaluated with the naked eye in terms of five grades. The larger the value, the better the ink acceptability.

(4) Ink acceptability

An ink of a smaller tack was used, and otherwise in the same manner as in the measurement of water resistance, printing was made so as not to cause picking, and the degree of ink transfer was evaluated with the naked eye in terms of five grades. The larger the value, the better the ink acceptability.

(5) Sheet gloss

75° -75 ° gloss was measured by use of a Murakami glossmeter.

(6) Blister resistance

Soild printing was made on both sides of the test piece with a web offset printing ink, and the temperature at which blister took place was measured by use of a blister tester (Kumagaya Riki).

TABLE 1

| | Examples | | | | |
|---|---|---|---|---|---|
| | 1 | 2 | 3 | 4 | 5 |
| Monomer Mixture (parts by weight) | | | | | |
|   Butadiene | 5/30 | 5/30 | 5/20 | 5/20 | 10/45 |
|   Styrene | 6/45 | 6/39 | 8/30 | 10/45 | 10/20 |
|   Methyl Methacrylate | 2/8 | 2/8 | 5/15 | 10/5 | 5/5 |
|   Acrylonitrile | | 5/0 | 2.5/5 | | |
|   Acrylamide | | | 2/1 | | |
|   2-Hydroxyethyl acrylate | | | 0/3 | | 1/0 |
|   Fumaric Acid | 2/0 | | | | |
|   Itaconic Acid | | 2/1 | 1/1 | | 1/0 |
|   Acrylic Acid | 0/1 | 0/2 | | 1/2 | |
|   Methacrylic Acid | 0/1 | | 0/1.5 | 1/1 | 0/3 |
| Chain-transfer Agent (parts by weight) | | | | | |
|   1,14-Tetradecanedithiol | 0.5/1.5 | | | | 0/2.5 |
|   1,5,10-Decanetrithiol | | 0.2/2.5 | | | |
|   Triglycol Dimercatan | | | | | |
|   Trimethylolpropane tristhioglycolate | | | | | |
|   Ethylene Glycol Dithioglycolate | | | 0.7/1.0 | | |
|   Pentaerythritol Tetrakisthiopropionate | | | | 1.5/0 | |
|   Carbon Tetrachloride | | | | | |
|   t-Dodecylmercaptan | | | | | 0.5/0 |
| Polymerization Initiator (parts by weight) | | | | | |
|   Potassium persulfate | 0.5/0 | | 0.2/0.5 | 1.5/0 | 1/0 |
|   Sodium persulfate | | 0.3/0.3 | | | |
|   2,2'-azobisisobutyronitrile | | | | | |

EP 0 565 891 A1

TABLE  1 (Continued)

| Monomer Mixture (parts by weight) | Examples | | | | |
|---|---|---|---|---|---|
| | 6 | 7 | 8 | 9 | 10 |
| Butadiene | 10/45 | 8/32 | 8/32 | 8/32 | 15/20 |
| Styrene | 20/5 | 10/15 | 10/40 | 10/35 | 6/45 |
| Methyl Methacrylate | 2/5 | 10/20 | | 0/5 | 2/8 |
| Acrylonitrile | 5/2 | | 1/2 | 1/2 | |
| Acrylamide | | 1/0 | | | |
| 2-Hydroxyethyl acrylate | | | | | |
| Fumaric Acid | 3/1 | | 2/0 | 2/0 | 2/0 |
| Itaconic Acid | | 2/0 | | | |
| Acrylic Acid | 1/1 | 0/2 | 0/3 | 0/3 | 0/1 |
| Methacrylic Acid | | | 1/1 | 1/1 | 0/1 |
| Chain-transfer Agent (parts by weight) | | | | | |
| 1,14-Tetradecanedithiol | | | | | 0.2/1.0 |
| 1,5,10-Decanetrithiol | 0.2/0.4 | | | 0/3.5 | |
| Triglycol Dimercatan | | | | | |
| Trimethylolpropane tristhioglycolate | | | | | |
| Ethylene Glycol Dithioglycolate | 0/3 | 2/0 | | | |
| Pentaerythritol Tetrakisthiopropionate | | | 1.5/1.2 | | 0/1.5 |
| Carbon Tetrachloride | | 0/4.0 | 0/2 | | 0/4.5 |
| t-Dodecylmercaptan | | | 0.5/0 | | |
| Polymerization Initiator (parts by weight) | | | | | |
| Potassium persulfate | 0.5/1 | 0.2/0.5 | | 1.5/0 | 1.5/0 |
| Sodium persulfate | | | | | |
| 2,2'-azobisisobutyronitrile | | 0.2/0.2 | 0.5/1.5 | | |

EP 0 565 891 A1

TABLE 1 (Continued)

| Monomer Mixture (parts by weight) | Examples | | | | |
|---|---|---|---|---|---|
| | 11 | 12 | 13 | 14 | 15 |
| Butadiene | 15/20 | 15/25 | 15/25 | 5/30 | 5/20 |
| Styrene | 10/35 | 10/30 | 10/20 | 6/45 | 6/55 |
| Methyl Methacrylate | 10/5 | 5/10 | 5/10 | 2/8 | 2/8 |
| Acrylonitrile | | 5/0 | 5/5 | | |
| Acrylamide | | | | | |
| 2-Hydroxyethyl acrylate | | 0/2 | | | |
| Fumaric Acid | | 1/0 | 1/0 | 2/0 | 2/0 |
| Itaconic Acid | | | 1/1 | | |
| Acrylic Acid | 1/2 | 1/1 | | 0/1 | 0/1 |
| Methacrylic Acid | 1/1 | | 0/2 | 0/1 | 0/1 |
| **Chain-transfer Agent (parts by weight)** | | | | | |
| 1,14-Tetradecanedithiol | 0.2/1.0 | | 0/2 | | |
| 1,5,10-Decanetrithiol | | | 0/5.0 | | |
| Triglycol Dimercatan | | | | | |
| Trimethylolpropane tristhioglycolate | | | | | |
| Ethylene Glycol Dithioglycolate | | | | 0.2/1.5 | 0.2/0.8 |
| Pentaerythritol Tetrakisthiopropionate | | 0.1/5 | | 0/1.5 | 0.3/1.0 |
| Carbon Tetrachloride | | | | | 1.0/2.5 |
| t-Dodecylmercaptan | | 0.6/0.9 | | | |
| **Polymerization Initiator (parts by weight)** | | | | | |
| Potassium persulfate | | | | 0.2/0.3 | |
| Sodium persulfate | 1.5/0 | 1.5/0 | 0.5/1.5 | 0.2/0.3 | 0.5/0 |
| 2,2'-azobisisobutyronitrile | | | | | 0.2/0.5 |

EP 0 565 891 A1

TABLE 1 (Continued)

| | Examples | | | | |
|---|---|---|---|---|---|
| | 16 | 17 | 18 | 19 | 20 |
| **Monomer Mixture (parts by weight)** | | | | | |
| Butadiene | 8/32 | 8/32 | 5/20 | 10/45 | 10/45 |
| Styrene | 10/35 | 10/35 | 10/45 | 10/20 | 10/20 |
| Methyl Methacrylate | 0/5 | 0/5 | 5/10 | 0/5 | 0/5 |
| Acrylonitrile | 1/2 | 1/2 | | 2/5 | 2/5 |
| Acrylamide | | | 1/0 | | |
| 2-Hydroxyethyl acrylate | | | | | 0/2 |
| Fumaric Acid | | | | | |
| Itaconic Acid | 3/0 | 3/0 | | | 1/0 |
| Acrylic Acid | 1/3 | 1/3 | 0/4 | | |
| Methacrylic Acid | | | | 0/3 | |
| **Chain-transfer Agent (parts by weight)** | | | | | |
| 1,14-Tetradecanedithiol | | | | | |
| 1,5,10-Decanetrithiol | | | | | |
| Triglycol Dimercatan | 0.1/1.0 | 0.1/0.5 | | | 0.2/0.5 |
| Trimethylolpropane tristhioglycolate | | | 0.3/2.0 | 0.5/2.5 | |
| Ethylene Glycol Dithioglycolate | | | | | |
| Pentaerythritol Tetrakisthiopropionate | | | | | 0/2.0 |
| Carbon Tetrachloride | | | | | |
| t-Dodecylmercaptan | | 0.2/0.5 | | 0.5/0 | |
| **Polymerization Initiator (parts by weight)** | | | | | |
| Potassium persulfate | 0.3/0.4 | | | 0.2/0.3 | |
| Sodium persulfate | | 0.5/0.2 | | | 0.2/0 |
| 2,2'-azobisisobutyronitrile | | | 0.3/0.4 | | 0/0.6 |

EP 0 565 891 A1

TABLE 2

| | Examples | | | | | | | | | |
|---|---|---|---|---|---|---|---|---|---|---|
| | 1 | 2 | 3 | 4 | 5 | 6 | 7 | 8 | 9 | 10 |
| Toluene Insoluble (%) | 69 | 58 | 74 | 78 | 64 | 68 | 72 | 65 | 81 | 54 |
| Adhesive Strength | 4.0 | 3.6 | 4.2 | 4.3 | 3.9 | 3.8 | 4.0 | 3.8 | 4.3 | 3.7 |
| Water Resistance | 4.1 | 3.9 | 4.1 | 4.0 | 4.4 | 4.2 | 4.2 | 4.0 | 4.0 | 3.9 |
| Ink Acceptability | 4.2 | 4.3 | 3.9 | 4.0 | 4.2 | 4.0 | 4.0 | 4.1 | 3.8 | 4.2 |
| White Paper Gloss (%) | 65.1 | 65.2 | 64.5 | 64.3 | 63.8 | 64.1 | 64.7 | 64.0 | 65.7 | 65.1 |
| Resistance to Blister (°C) | 510 | 520 | 500 | 490 | 520 | 520 | 510 | 530 | 490 | 540 |

TABLE 2 (Continued)

| | 実 | | | 施 | | | 例 | | | |
|---|---|---|---|---|---|---|---|---|---|---|
| | 11 | 12 | 13 | 14 | 15 | 16 | 17 | 18 | 19 | 20 |
| Toluene Insoluble (%) | 85 | 71 | 35 | 61 | 42 | 73 | 52 | 80 | 66 | 61 |
| Adhesive Strength | 4.5 | 4.2 | 3.2 | 3.7 | 3.4 | 4.3 | 3.7 | 4.5 | 4.0 | 4.0 |
| Water Resistance | 3.5 | 4.2 | 3.9 | 4.2 | 3.9 | 3.7 | 3.9 | 3.7 | 4.2 | 4.3 |
| Ink Acceptability | 3.8 | 4.0 | 4.5 | 4.0 | 4.5 | 4.1 | 4.3 | 4.2 | 4.0 | 3.8 |
| White Paper Gloss (%) | 65.6 | 64.5 | 63.9 | 64.3 | 65.7 | 65.2 | 64.8 | 64.2 | 65.7 | 65.5 |
| Resistance to Blister (℃) | 490 | 500 | 560 | 530 | 540 | 500 | 540 | 490 | 530 | 530 |

EP 0 565 891 A1

TABLE 3

| Monomer Mixture (parts by weight) | Comparative Examples | | | | |
|---|---|---|---|---|---|
| | 1 | 2 | 3 | 4 | 5 |
| Butadiene | 5/30 | 5/30 | 10/45 | 8/32 | 5/20 |
| Styrene | 6/45 | 6/39 | 10/20 | 10/40 | 6/55 |
| Methyl Methacrylate | 2/8 | 2/8 | 5/5 | | 2/8 |
| Acrylonitrile | | 5/0 | | 1/2 | |
| Acrylamide | | | | | |
| 2-Hydroxyethyl acrylate | | | 1/0 | | |
| Fumaric Acid | 2/0 | | | 2/0 | 2/0 |
| Itaconic Acid | | 2/1 | 1/0 | | |
| Acrylic Acid | 0/1 | 0/2 | | 0/3 | 0/1 |
| Methacrylic Acid | 0/1 | | 0/3 | 1/1 | 0/1 |
| Chain-transfer Agent (parts by weight) | | | | | |
| Carbon Tetrachloride | 2/4 | 1/2.5 | | 1/3.5 | 3/0 |
| t-dodecylmercaptan | | 0.1/0.2 | 0.5/2.5 | 0/0.3 | 0/1.2 |
| Polymerization Initiator (parts by weight) | | | | | |
| Potassium persulfate | 0.5/0 | | 1/0 | | |
| Sodium persulfate | | 0.3/0.3 | | | 0.5/0 |
| 2,2'-azobisisobutyronitrile | | | | 0.5/1.5 | 0.2/0.5 |

17

TABLE 4

| | Comparative Examples | | | | |
|---|---|---|---|---|---|
| | 1 | 2 | 3 | 4 | 5 |
| Toluene Insoluble (%) | 76 | 72 | 47 | 66 | 58 |
| Adhesive Strength | 3.5 | 3.3 | 2.5 | 3.0 | 3.0 |
| Water Resistance | 3.0 | 3.5 | 3.0 | 3.6 | 3.2 |
| Ink Acceptability | 3.5 | 3.3 | 3.7 | 3.0 | 3.5 |
| White Paper Gloss (%) | 63.8 | 64.1 | 63.0 | 63.4 | 64.5 |
| Resistance to Blister (°C) | 460 | 460 | 500 | 480 | 470 |

EP 0 565 891 A1

TABLE 5

| Monomer Mixture (parts by weight) | Examples | | | | |
|---|---|---|---|---|---|
| | 21 | 22 | 23 | 24 | 25 |
| Butadiene | 5/25/5 | 5/25/5 | 5/20/5 | 5/18/2 | 10/40/5 |
| Styrene | 6/40/5 | 6/34/5 | 8/24/6 | 10/42/3 | 10/10/10 |
| Methyl Methacrylate | 2/5/3 | 2/5/3 | 5/5/5 | 10/4/1 | 5/5/0 |
| Acrylonitrile | | 5/0/0 | 2.5/4/1 | | |
| Acrylamide | | | 2/1/0 | | |
| 2-Hydroxyethyl acrylate | | | 0/2/1 | | 1/0/0 |
| Fumaric Acid | 2/0/0 | | | | |
| Itaconic Acid | | 2/0.5/0.5 | 1/1/0 | | 1/0/0 |
| Acrylic Acid | 0/0.5/0.5 | 0/1/1 | | 1/1/1 | |
| Methacrylic Acid | 0/1/0 | | 0/1.5/0 | 1/1/0 | 0/2/1 |
| Chain-transfer Agent (parts by weight) | | | | | |
| 1,14-Tetradecanedithiol | | 0.5/0.5/0.5 | | | |
| Triglycol Dimercatan | 0.2/0.5/1.0 | | | | |
| Trimethylolpropane tristhioglycolate | | | 0.5/0.3/0.9 | | |
| Pentaerythritol Tetrakisthiopropionate | | | | | |
| Ethylene Glycol Dithioglycolate | | | | 0.2/0.3/1.2 | |
| $\alpha$-Methylstyrene Dimer | | | | | 0.2/0.8/0 |
| t-dodecylmercaptan | | | | | 0/0/1.5 |
| Polymerization Initiator (parts by weight) | | | | | |
| Potassium persulfate | 0.5/0/0.2 | | 0.2/0.2/0.3 | 1.5/0/0 | 1/0.5/0 |
| Sodium persulfate | | 0.3/0.3/0 | | | |
| 2,2'-azobisisobutyronitrile | | | | | |

EP 0 565 891 A1

TABLE 5 (Continued)

| | Examples | | | | |
|---|---|---|---|---|---|
| | 26 | 27 | 28 | 29 | 30 |
| Monomer Mixture (parts by weight) | | | | | |
| Butadiene | 10/35/10 | 8/30/2 | 8/30/2 | 8/26/6 | 15/12/8 |
| Styrene | 20/5/0 | 10/10/5 | 10/36/4 | 10/34/1 | 6/40/5 |
| Methyl Methacrylate | 2/3/2 | 10/10/10 | | 0/3/2 | 2/5/3 |
| Acrylonitrile | 5/1/1 | | 1/1/1 | 1/2/0 | |
| Acrylamide | | 1/0/0 | | | |
| 2-Hydroxyethyl acrylate | | | | | |
| Fumaric Acid | 3/1/0 | | 2/0/0 | 2/0/0 | 2/0/0 |
| Itaconic Acid | | 2/0/0 | | | |
| Acrylic Acid | 1/1/0 | 0/1/1 | 0/2/1 | 0/3/0 | 0/1/0 |
| Methacrylic Acid | | | 1/1/0 | 1/0/1 | 0/0/1 |
| Chain-transfer Agent (parts by weight) | | | | | |
| 1,14-Tetradecanedithiol | | | 0.2/0.5/0 | | 0.7/0.2/0 |
| Triglycol Dimercatan | 0.2/0.3/1.5 | | 0/0/0.5 | | |
| Trimethylolpropane tristhioglycolate | | 0.2/0/1.0 | | 0/0/2.0 | |
| Pentaerythritol Tetrakisthiopropionate | | 0.5/1.0/0 | | | |
| α-Methylstyrene Dimer | | | | 0.3/0.5/0 | |
| t-dodecylmercaptan | 0.2/0.5/0 | | | | 0.1/0.5/0.5 |
| Polymerization Initiator (parts by weight) | | | | | |
| Potassium persulfate | 0.5/1/0 | 0.2/0.2/0.1 | | | 1.5/0/0.5 |
| Sodium persulfate | | | | 1.5/0/0.5 | |
| 2,2'-azobisisobutyronitrile | | 0.2/0/0.2 | 0.5/1/0.5 | | |

TABLE 6

| | Examples | | | | | | | | | |
|---|---|---|---|---|---|---|---|---|---|---|
| | 21 | 22 | 23 | 24 | 25 | 26 | 27 | 28 | 29 | 30 |
| Toluene Insoluble (%) | 63 | 75 | 83 | 85 | 71 | 52 | 79 | 88 | 68 | 42 |
| Adhesive Strength | 3.9 | 4.1 | 4.3 | 4.5 | 4.0 | 3.5 | 4.1 | 4.3 | 3.8 | 3.5 |
| Water Resistance | 4.2 | 4.0 | 4.0 | 3.8 | 4.0 | 3.8 | 4.0 | 3.7 | 4.5 | 3.5 |
| Ink Acceptability | 3.7 | 3.8 | 4.0 | 4.5 | 4.0 | 3.8 | 3.9 | 4.4 | 3.5 | 4.0 |
| White Paper Gloss (%) | 65.2 | 64.7 | 66.0 | 65.8 | | | 64.3 | 66.2 | | |
| Resistance to Blister (°C) | 530 | 500 | 490 | 480 | 520 | 560 | 510 | 470 | 520 | 560 |

EP 0 565 891 A1

TABLE 7

| Monomer Mixture (parts by weight) | Comparative Examples | | | |
|---|---|---|---|---|
| | 6 | 7 | 8 | 9 |
| Butadiene | 5/10/20 | 5/20/10 | 5/10/10 | 10/10/35 |
| Styrene | 6/30/15 | 6/35/9 | 10/25/20 | 10/5/15 |
| Methyl Methacrylate | 2/4/4 | 2/5/3 | 10/5/0 | 5/5/0 |
| Acrylonitrile | | | | |
| Acrylamide | | | | |
| 2-Hydroxyethyl acrylate | | | | 1/0/0 |
| Fumaric Acid | 2/0/0 | | | |
| Itaconic Acid | | 2/1/0 | | 1/0/0 |
| Acrylic Acid | 0/0/1 | 0/0/2 | 1/1/1 | |
| Methacrylic Acid | 0/1/0 | | 1/0/1 | 0/1/2 |
| **Chain-transfer Agent (parts by weight)** | | | | |
| 1,14-Tetradecanedithiol | 0.2/0.5/1.0 | | | |
| Triglycol Dimercatan | | | | 0.5/1.0/0 |
| Trimethylolpropane tristhioglycolate | | 0.2/0.5/1.5 | | |
| Pentaerythritol Tetrakisthiopropionate | | | 0.2/1.0/0 | |
| $\alpha$-Methylstyrene Dimer | | | 1/2/0.5 | |
| t-dodecylmercaptan | | | | |
| **Polymerization Initiator (parts by weight)** | | | | |
| Potassium persulfate | | | 0.2/0.2/0.3 | |
| Sodium persulfate | 0.2/0.5/0.2 | 0.1/0.4/0.5 | | |
| 2,2'-azobisisobutyronitrile | | | | 0.5/0.5/0.1 |

22

TABLE 7 (Continued)

| Monomer Mixture (parts by weight) | Comparative Examples | | | |
|---|---|---|---|---|
| | 10 | 11 | 12 | 13 |
| Butadiene | 10/35/10 | 8/30/2 | 8/25/7 | 15/10/10 |
| Styrene | 20/5/0 | 10/10/5 | 10/36/4 | 6/42/3 |
| Methyl Methacrylate | 2/3/2 | 10/10/10 | | 2/5/3 |
| Acrylonitrile | 5/1/1 | | 1/1/0 | |
| Acrylamide | | 1/0/0 | | |
| 2-Hydroxyethyl acrylate | | | 2/0/0 | 2/0/0 |
| Fumaric Acid | 3/1/0 | | | |
| Itaconic Acid | | 2/0/0 | | |
| Acrylic Acid | 1/1/0 | 0/1/1 | 0/2/2 | 0/1/0 |
| Methacrylic Acid | | | 1/1/0 | 0/0/1 |
| Chain-transfer Agent (parts by weight) | | | | |
| 1,14-Tetradecanedithiol | | 0.5/0.5/0.5 | | |
| Triglycol Dimercatan | | | | |
| Trimethylolpropane tristhioglycolate | | 0.1/0.2/0.5 | | |
| Pentaerythritol Tetrakisthiopropionate | | | | 0.5/2/0.3 |
| $\alpha$-Methylstyrene Dimer | | | 0.5/1/1 | |
| t-dodecylmercaptan | 0.2/0.8/1.5 | | 0.2/0.5/1 | |
| Polymerization Initiator (parts by weight) | | | | |
| Potassium persulfate | 0.5/1/0 | 0.2/0.2/0.1 | | 1/0.5/0.5 |
| Sodium persulfate | | | | |
| 2,2'-azobisisobutyronitrile | | 0.2/0/0.2 | 0.5/0.5/0.5 | |

EP 0 565 891 A1

TABLE 8

|  | Comparative Examples | | | | | | | |
|---|---|---|---|---|---|---|---|---|
|  | 6 | 7 | 8 | 9 | 10 | 11 | 12 | 13 |
| Toluene Insoluble (%) | 72 | 82 | 63 | 87 | 51 | 78 | 46 | 57 |
| Adhesive Strength | 3.5 | 3.9 | 3.2 | 4.0 | 3.0 | 3.9 | 3.0 | 3.3 |
| Water Resistance | 3.0 | 2.5 | 3.0 | 2.2 | 2.5 | 2.7 | 2.5 | 2.9 |
| Ink Acceptability | 3.0 | 3.2 | 3.0 | 3.4 | 2.8 | 3.0 | 3.0 | 2.5 |
| Resistance to Blister (°C) | 470 | 440 | 480 | 440 | 480 | 450 | 500 | 490 |

**Claims**

1. A method of producing a copolymer latex which comprises emulsion-polymerizing a monomer mixture comprising (a) a conjugated dienic monomer, (b) an ethylenically unsaturated monomer, and (c) an

24

ethylenically unsaturated carboxylic acid monomer in the presence of a polyfunctional mercaptan compound as a chain-transfer agent.

2. The method as claimed in claim 1 wherein the ethylenically unsaturated monomer is at least one monomer selected from the group consisting of aromatic vinyl monomers, (meth)acrylic acid esters, (meth)acrylic acid amides, carboxylic acid vinyl esters, vinyl cyanide monomers and vinyl pyridines.

3. The method as claimed in claim 1 wherein the monomer mixture comprises (a) a conjugated dienic monomer in an amount of 10-80% by weight, (b) an ethylenically unsaturated monomer in an amount of 20-90% by weight, and (c) an ethylenically unsaturated carboxylic acid monomer in an amount of 0.2-12% by weight.

4. The method as claimed in claim 1 wherein the monomer mixture comprises a conjugated dienic monomer in an amount of 20-60% by weight, at least one ethylenically unsaturated monomer in an amount of 40-80% by weight and an ethylenically unsaturated carboxylic acid monomer in an amount of 0.5-8% by weight.

5. The method as claimed in claim 1 wherein the monomer mixture is emulsion-polymerized in the presence of a polyfunctional mercaptan in an amount of 0.01-15 parts by weight in relation to 100 parts by weight of the monomer mixture.

6. The method as claimed in claim 1 wherein the conjugated dienic monomer is butadiene.

7. The method as claimed in claim 1 wherein the ethylenically unsaturated monomer is styrene, methyl methacrylate, (meth)acrylamide, 2-hydroxyethyl (meth)acrylate or acrylonitrile, or a mixture of two or more of these.

8. The method as claimed in claim 1 wherein the ethylenically unsaturated carboxylic acid monomer is acrylic acid, methacrylic acid, fumaric acid, aleic acid or itaconic acid, or a mixture of two or more of these.

9. The method as claimed in claim 1 wherein the ethylenically unsaturated monomer is styrene.

10. The method as claimed in claim 1 wherein the polyfunctional mercaptan is represented by the formula (I):

R-(A-SH)p      (I)

wherein R represents a hydrocarbon residue having a valence of p; p is an integer of 2-8; and wherein A represents a covalent bond, or a divalent organic group having the formula (II):

$-(CH_2)_m-O-CO-(CH_2)_n-$      (II)

wherein m is an integer of 0-18; and n is an integer of 1-18; or a divalent organic group having the formula (III):

$-O-(CH_2)_q-$      (III)

wherein q is an integer of 1-6.

11. The method as claimed in claim 10 wherein R is an aliphatic hydrocarbon residue of 1-4 carbons and having a valence of p; p is 2, 3 or 4; and wherein A is $-O-(CN_2)_q-$ in which q is 1, 2 or 3.

12. The method as claimed in claim 1 wherein the polyfunctional mercaptan is 1,14-tetradecanedithiol.

13. The method as claimed in claim 1 wherein the polyfunctional mercaptan is 1,5,10-decanetrithiol.

14. The method as claimed in claim 1 wherein the polyfunctional mercaptan is triglycol dimercaptan.

**15.** The method as claimed in claim 1 wherein the polyfunctional mercaptan is trimethylolpropane tristhioglycolate.

**16.** The method as claimed in claim 1 wherein the polyfunctional mercaptan is ethylene glycol dithioglycolate.

**17.** The method as claimed in claim 1 wherein the polyfunctional mercaptan is pentaerythritol tetrakisthiopropionate.

**18.** A method of producing a copolymer latex which comprises carrying out emulsion-polymerization of a monomer mixture comprising (a) a conjugated dienic monomer, (b) an ethylenically unsaturated monomer, and (c) an ethylenically unsaturated carboxylic acid monomer in the presence of a chain-transfer agent in a polymerization vessel thereby to provide a copolymer latex, wherein the monomer mixture and the chain-transfer agent are added to the polymerization vessel in a plurality of stages during the polymerization, and at the final stage, 1-20% by weight of the total of the monomer mixture are added together with a portion of the chain-transfer agent to the polymerization vessel continually.

**19.** The method as claimed in claim 18 wherein the ethylenically unsaturated monomer is at least one monomer selected from the group consisting of aromatic vinyl monomers, (meth)acrylic acid esters, (meth)acrylic acid amides, carboxylic acid vinyl esters, vinyl cyanide monomers and vinyl pyridines.

**20.** The method as claimed in claim 18 wherein the monomer mixture comprises (a) a conjugated dienic monomer in an amount of 10-80% by weight, (b) an ethylenically unsaturated monomer in an amount of 20-90% by weight, and (c) an ethylenically unsaturated carboxylic acid monomer in an amount of 0.2-12% by weight.

**21.** The method as claimed in claim 18 wherein the monomer mixture comprises a conjugated dienic monomer in an amount of 20-60% by weight, at least one ethylenically unsaturated monomer in an amount of 40-80% by weight and an ethylenically unsaturated carboxylic acid monomer in an amount of 0.5-8% by weight.

**22.** The method as claimed in claim 18 wherein the monomer mixture is emulsion-polymerized in the presence of a polyfunctional mercaptan in an amount of 0.01-15 parts by weight in relation to 100 parts by weight of the monomer mixture.

**23.** The method as claimed in claim 18 wherein the conjugated dienic monomer is butadiene.

**24.** The method as claimed in claim 18 wherein the ethylenically unsaturated monomer is styrene, methyl methacrylate, (meth)acrylamide, 2-hydroxyethyl (meth)acrylate or acrylonitrile, or a mixture of two or more of these.

**25.** The method as claimed in claim 18 wherein the ethylenically unsaturated carboxylic acid monomer is acrylic acid, methacrylic acid, fumaric acid, maleic acid, or itaconic acid, or a mixture of two or more of these.

**26.** The method as claimed in claim 18 wherein the ethylenically unsaturated monomer is styrene.

**27.** The method as claimed in claim 18 wherein at the final stage 1-20% by weight of the total of the monomer mixture are added together with 25-90% by weight of the total of chain-transfer agent to the polymerization vessel continually.

**28.** The method as claimed in claim 18 wherein the chain-transfer agent added to the polymerization vessel at the final stage is a mercaptan compound having at least one mercapto group in the molecule.

**29.** The method as claimed in claim 18 wherein the chain-transfer agent added to the polymerization vessel at the final stage is a mercaptan compound having at least two mercapto groups in the molecule.

26

30. The method as claimed in claim 18 wherein the polymerization conversion rate immediately before the final stage is in the range of 40-80% of the amount of the monomer mixture added to the polymerization vessel immediately before the final stage.

31. A copolymer latex produced by emulsion-polymerizing a monomer mixture comprising (a) a conjugated dienic monomer in an amount of 10-80% by weight, (b) an ethylenically unsaturated monomer in an amount of 20-90% by weight, and (c) an ethylenically unsaturated carboxylic acid monomer in an amount of 0.2-12% by weight, in the presence of a polyfunctional mercaptan in an amount of 0.01-15 parts by weight in relation to 100 parts by weight of the monomer mixture.

32. A copolymer latex produced by emulsion-polymerizing a monomer mixture comprising (a) a conjugated dienic monomer in an amount of 10-80% by weight, (b) an ethylenically unsaturated monomer in an amount of 20-90% by weight, and (c) an ethylenically unsaturated carboxylic acid monomer in an amount of 0.2-12% by weight, in the presence of a chain-transfer agent in a polymerization vessel thereby to provide a copolymer latex, wherein the monomer mixture and the chain-transfer agent are added to the polymerization vessel in a plurality of stages during the polymerization, and at the final stage, 1-20% by weight of the total of the monomer mixture are added together with a portion of the chain-transfer agent to the polymerization vessel continually.

33. A paper coating composition which comprises a copolymer latex produced by emulsion-polymerizing a monomer mixture comprising (a) a conjugated dienic monomerin an amount of 10-80% by weight, (b) an ethylenically unsaturated monomer in an amount of 20-90% by weight, and (c) an ethylenically unsaturated carboxylic acid monomer in an amount of 0.2-12% by weight, in the presence of a polyfunctional mercaptan in an amount of 0.01-15 parts by weight in relation to 100 parts by weight of the monomer mixture.

34. A paper coating composition which comprises a copolymer latex produced by emulsion-polymerizing a monomer mixture comprising (a) a conjugated dienic monomerin an amount of 10-80% by weight, (b) an ethylenically unsaturated monomer in an amount of 20-90% by weight, and (c) an ethylenically unsaturated carboxylic acid monomer in an amount of 0.2-12% by weight, in the presence of a chain-transfer agent in a polymerization vessel thereby to provide a copolymer latex, whertein the monomer mixture and the chain-transfer agent are added to the polymerization vessel in a plurality of stages during the polymerization, and at the final stage, 1-20% by weight of the total of the monomer mixture are added together with a portion of the chain-transfer agent to the polymerization vessel continually.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | CHEMICAL PATENTS INDEX, DOCUMENTATION ABSTRACTS JOURNAL<br>Section Ch, Week 9213, 1992<br>Derwent Publications Ltd., London, GB;<br>Class A, AN 92-099883<br>& JP-A-4 041 509 (ASAHI CHEMICAL IND KK)<br>12 February 1992<br>* abstract * | 1,33 | C08F236/04<br>C08F2/38 |
| A | CHEMICAL PATENTS INDEX, DOCUMENTATION ABSTRACTS JOURNAL<br>Section Ch, Week 9213, 1992<br>Derwent Publications Ltd., London, GB;<br>Class A, AN 92-099877<br>& JP-A-4 041 503 (ASAHI CHEMICAL IND KK)<br>12 February 1992<br>* abstract * | 1,18,<br>33-34 | |
| A | FR-A-2 249 898 (HOECHST AG)<br>* claims 1-2 * | 1 | |

-----

TECHNICAL FIELDS SEARCHED (Int. Cl.5)

C08F

The present search report has been drawn up for all claims

| Place of search | Date of completion of the search | Examiner |
|---|---|---|
| THE HAGUE | 02 JULY 1993 | VAN HUMBEECK F. |

EPO FORM 1503 03.82 (P0401)